# EUROPÄISCHE PATENTSCHRIFT

(11) **EP 3 234 221 B1**
(45) Veröffentlichungstag und Bekanntmachung des Hinweises auf die Patenterteilung: **16.11.2022**
(21) Anmeldenummer: 15817149.6
(22) Anmeldetag: 15.12.2015
(51) Int. Cl.: C23C 22/34

(54) **VERFAHREN ZUM HAFTFESTEN BESCHICHTEN VON METALLISCHEN OBERFLÄCHEN, INSBESONDERE VON ALUMINIUMWERKSTOFFEN**
METHOD FOR FIRMLY ADHERING COATING OF METALLIC SURFACES, PARTICULARLY OF ALUMINIUM MATERIALS
PROCÉDÉ POUR POURVOIR DES SURFACES MÉTALLIQUES, EN PARTICULIER DES MATÉRIAUX À BASE D'ALUMINIUM, DE REVÊTEMENTS ANTIADHÉSIFS

(30) Priorität: 15.12.2014 DE 102014225801
(43) Veröffentlichungstag der Anmeldung: 25.10.2017
(73) Patentinhaber: Chemetall GmbH, 60487 Frankfurt am Main (DE)
(72) Erfinder: SEBRALLA, Lars, 63486 Bruchköbel (DE); BIRKENHEUER, Stefan, 60433 Frankfurt (DE); WALTER, Manfred, 63452 Hanau (DE); KHELFALLAH, Nawel Souad, 60489 Frankfurt (DE)
(74) Vertreter: BASF IP Association
(86) Internationale Anmeldenummer: PCT/EP2015/079678
(87) Internationale Veröffentlichungsnummer: WO 2016/096777

(56) Entgegenhaltungen:
- EP-A1- 2 151 481
- WO-A2-02/31065
- DE-A1-102005 015 573
- DE-A1-102005 015 575
- DE-A1-102011 082 312
- US-A1- 2004 062 873
- US-A1- 2011 100 513
- US-A1- 2013 160 898

## Beschreibung

Die vorliegende Erfindung betrifft eine wässrige saure Zusammensetzung zur Beschichtung von metallischen Oberflächen, insbesondere von Aluminiumwerkstoffen, welche mindestens ein Organoalkoxysilan, Organosilanol, Polyorganosilanol, Organosiloxan und/oder Polyorganosiloxan sowie weitere Komponenten enthält. Ferner betrifft die Erfindung ein entsprechendes Verfahren sowie die Verwendung der nach diesem Verfahren beschichteten Substrate.

Die Beschichtung metallischer Oberflächen durch Behandlung mit einer wässrigen Zusammensetzung, welche Organoalkoxysilane, deren Hydrolyse- und/oder Kondensationsprodukte sowie weitere Komponenten enthält, ist bekannt.

Durch die gebildeten Beschichtungen lässt sich ein Korrosionsschutz für die behandelten Metallsubstrate erzielen sowie eine gewisse Verbesserung hinsichtlich der Haftung weiterer Schichten wie Lacke.

Im Stand der Technik findet sich auch die Zugabe bestimmter säurestabiler Polymere zu den genannten Zusammensetzungen. Auf diese Weise lassen sich die Eigenschaften der gebildeten Schichten verbessern.

Die US2011/100513A1 beschreibt wässerige Zusammensetzungen zum Behandeln einer Oberfläche eines Zink-enthaltenden Metalls, die eine Organopolyphosphonsäure, ein Organosilan und eine dreiwertige Chromverbindung umfassen.

WO02/31065A2 beschreibt ein Verfahren zur Beschichtung eines metallischen Bandes, wobei die Oberfläche mit einer wässrigen Dispersion, die ein Polymer, einen Komplex aus Ti-, Zr-, Hf-, Si-, Al-, B-Kationen sowie mindestens eine anorganische Verbindung in Partikelform enthält, in Kontakt gebracht wird.

Die DE10 2011 082312 A1 beschreibt ein Verfahren zum Beschichten von metallischen Oberflächen mit einer wässerigen Zusammensetzung, die Phosphat, eine Ti- und/oder Zr-Verbindung, Komplexbildner, Polymer sowie weitere Bestandteile enthält.

US 2004/062873 A1 beschreibt ein Verfahren zum Beschichten eines Metallstreifens.

US 2013/160898 A1 offenbart eine chemisch behandelte Stahlplatte auf Zinkbasis, die einen chemischen Konversionsfilm aus Fluorharz umfasst.

Die EP 2 151 481 A1 beschreibt eine wässerige Lösung zur Beschichtung von metallischen Oberflächen, wobei die Lösung eine modifizierte Kieselsäure aufweist.

DE 10 2005 015573 A1 offenbart ein Verfahren zur Beschichtung von metallischen Oberflächen mit einer Silan/Silanol/Siloxan/Polysiloxan enthaltenden Zusammensetzung.

Auch die DE 10 2005 015575 A1 offenbart ein Verfahren zur Beschichtung von metallischen Oberflächen mit einer Silan/Silanol/Siloxan/Polysiloxan enthaltenden Zusammensetzung.

Es treten jedoch, insbesondere bei Oberflächen aus Aluminium oder Aluminiumlegierungen, nach wie vor Probleme insbesondere bei der Lackhaftung auf, welche auch durch die Verwendung der erwähnten Polymere bislang nicht zufriedenstellend gelöst werden konnten.

Die bekannten Verfahren tolerieren zudem nicht mehr als 80 mg/l an Aluminium im Behandlungsbad. Durch die Alterung des Behandlungsbades, d.h. durch das Herauslösen von unter anderem Aluminiumionen aus den behandelten Oberflächen, kann dieser Gehalt jedoch ohne weiteres überschritten werden.

Aufgabe der vorliegenden Erfindung war es daher, die Nachteile des Standes der Technik zu überwinden, insbesondere die Haftung weiterer Schichten wie Lacke bei gleichzeitig gutem Korrosionsschutz zu verbessern, insbesondere bei Aluminiumwerkstoffen.

Gelöst wird die Aufgabe durch ein erfindungsgemäßes Verfahren zur Beschichtung von metallischen Oberflächen, insbesondere von Aluminiumwerkstoffen, bei dem eine metallische Oberfläche mit einer erfindungsgemäßen Zusammensetzung in Kontakt gebracht wird.

Diese Zusammensetzung umfasst neben Wasser die Komponenten a) bis d), wobei der Gehalt an freiem Fluorid im Bereich von 0,015 bis 0,15 g/l liegt. Dabei ist
a) mindestens eine Verbindung ausgewählt aus der Gruppe bestehend aus Organoalkoxysilanen, Organosilanolen, Polyorganosilanolen, Organosiloxanen und Polyorganosiloxanen,
b) mindestens eine Verbindung ausgewählt aus der Gruppe bestehend aus Titan-, Zirkonium-, Hafnium- und Aluminium-Verbindungen und Siliciumkomplexfluorid,
c) mindestens ein Copolymer, das zumindest bei einem Teilbereich des pH-Wertes unter 6 stabil ist und in alternierender Konfiguration Monomereinheiten, welche mindestens eine Carbonsäuregruppe und/oder Phosphonsäuregruppe enthalten, und Monomereinheiten, welche keine Säuregruppe enthalten, aufweist und
d) mindestens eine Art von Kation ausgewählt aus der Gruppe bestehend aus Kationen von Metallen der 1. bis 3. und 5. bis 8. Nebengruppe einschließlich Lanthaniden sowie der 2. Hauptgruppe des Periodensystems der Elemente sowie von Lithium, von Bismut und von Zinn und/oder mindestens eine entsprechende Verbindung,
   wobei die Konzentration von a) im Bereich von 1 bis 200 mg/l, die von b) im Bereich von 0,05 bis 4 g/l, die von c) im Bereich von 0,02 bis 2 g/l und die von d) im Bereich von 0,02 bis 2 g/l liegt.

Die erfindungsgemäße Zusammensetzung weist zudem einen pH-Wert im sauren Bereich auf. Es handelt sich also um eine saure wässrige Zusammensetzung.

### Definitionen:

Im Sinne der vorliegenden Erfindung ist unter "wässriger Zusammensetzung" auch eine solche zu verstehen, die neben Wasser als Lösungs-/Dispergiermittel noch weniger als 50 Gew.-% - bezogen auf die Gesamtmenge der Lösungs-/Dispergiermittel - andere, organische Lösungs-/Dispergiermittel enthält.

Hinsichtlich der mindestens einen Verbindung der Komponente a) ist mit "Organo-" mindestens eine organische Gruppe gemeint, die direkt über ein Kohlenstoffatom mit einem Siliciumatom verbunden ist und infolgedessen nicht hydrolytisch von diesem abgespalten wird.

Im Zusammenhang mit dem mindestens einen Copolymer der Komponente c) soll "stabil" heißen, dass dieses während der Behandlung der metallischen Oberfläche im Wesentlichen gelöst und/oder dispergiert bleibt, d.h. nicht im nennenswerten Umfang ausfällt.

Im Sinne der vorliegenden Erfindung ist unter "berechnet als Hexafluorozirkoniumsäure" die Fiktion zu verstehen, es handele sich bei sämtlichen Molekülen der Komponente b) um Hexafluorozirkoniumsäure-Moleküle, also H₂ZrF₆.

Mit "Komplexfluoriden" sind neben den deprotonierten Formen auch die jeweiligen ein- oder mehrfach protonierten Formen gemeint.

Die vorliegende Erfindung bezieht sich auch auf ein Konzentrat, aus dem durch Verdünnen und gegebenenfalls Einstellen des pH-Wertes ein Bad für die Behandlung der metallischen Oberfläche, also mit der erfindungsgemäßen Zusammensetzung, hergestellt werden kann.

Das Konzentrat weist für die einzelnen Komponenten a) bis d) die folgenden Gehalte auf:
Die Konzentration von a) liegt vorzugsweise im Bereich von 0,05 bis 10 g/l, weiter bevorzugt 0,5 bis 10 g/l, besonders bevorzugt 2 bis 4 g/l und ganz besonders bevorzugt im Bereich von 2,5 bis 3,5 g/l, berechnet als Silicium.

Die Konzentration von b) liegt vorzugsweise im Bereich von 1 bis 100 g/l, weiter bevorzugt 20 bis 75 g/l, besonders bevorzugt 22 bis 57 g/l und ganz besonders bevorzugt im Bereich von 40 bis 50 g/l, berechnet als Hexafluorozirkoniumsäure.

Die Konzentration von c) liegt vorzugsweise im Bereich von 1 bis 200 g/l, weiter bevorzugt 10 bis 100 g/l, besonders bevorzugt 10 bis 50 g/l und ganz besonders bevorzugt im Bereich von 15 bis 20 g/l, berechnet als Feststoffzusatz.

Die Konzentration von d) liegt vorzugsweise im Bereich von 1 bis 50 g/l, weiter bevorzugt 7 bis 35 g/l und besonders bevorzugt im Bereich von 15 bis 25 g/l, berechnet als Summe der Metalle.

In einer ganz besonders bevorzugten Ausführungsform liegt die Konzentration von a) im Bereich von 2,5 bis 3,5 g/l, die von b) im Bereich von 40 bis 50 g/l, die von c) im Bereich von 15 bis 20 g/l und die von d) im Bereich von 15 bis 25 g/l.

Das Konzentrat weist vorzugsweise einen pH-Wert im Bereich von 0,5 bis 5,5, besonders bevorzugt von 0,5 bis 4 und besonders bevorzugt von 1 bis 2 auf.

Das Behandlungsbad mit der erfindungsgemäßen Zusammensetzung kann durch Verdünnen des Konzentrats mit Wasser, einer wässrigen Lösung und/oder einem geeigneten organischen Lösungsmittel vorzugsweise um den Faktor 1:5000 bis 1:10, weiter bevorzugt 1:1000 bis 1:10, besonders bevorzugt 1:300 bis 1:10 und ganz besonders bevorzugt um den Faktor ca. 1:100 erhalten werden.

Im Behandlungsbad weist die erfindungsgemäße Zusammensetzung für die einzelnen Komponenten a) bis d) die folgenden Gehalte auf:
Die Konzentration von a) liegt vorzugsweise im Bereich von 5 bis 100 mg/l, weiter bevorzugt 20 bis 40 mg/l, besonders bevorzugt 25 bis 35 mg/l und ganz besonders bevorzugt bei ca. 30 mg/l, berechnet als Silicium.

Die Konzentration von b) liegt vorzugsweise im Bereich von 0,15 bis 1,5 g/l, weiter bevorzugt 0,22 bis 0,57 g/l, besonders bevorzugt 0,40 bis 0,50 g/l und ganz besonders bevorzugt bei ca. 0,45 g/l, berechnet als Hexafluorozirkoniumsäure.

Die Konzentration von c) liegt vorzugsweise im Bereich von 0,07 bis 0,7 g/l, weiter bevorzugt 0,08 bis 0,35 g/l, besonders bevorzugt 0,15 bis 0,20 g/l und ganz besonders bevorzugt bei ca. 0,17 g/l, berechnet als Feststoffzusatz.

Die Konzentration von d) liegt vorzugsweise im Bereich von 0,07 bis 0,7 g/l, besonders bevorzugt 0,15 bis 0,25 g/l und ganz besonders bevorzugt bei ca. 0,2 g/l, berechnet als Summe der Metalle.

Die Gehalte der Komponenten a), b) und d) lassen sich während der Behandlung der metallischen Oberflächen mittels ICP-OES (optische Emissionsspektrometrie mit induktiv gekoppeltem Plasma) oder näherungsweise photometrisch überwachen, sodass gegebenenfalls eine Nachdosierung einzelner oder mehrerer Komponenten vorgenommen werden kann.

In einer besonders bevorzugten Ausführungsform liegt die Konzentration von a) im Bereich von 25 bis 35 mg/l, die von b) im Bereich von 0,40 bis 0,50 g/l, die von c) im Bereich von 0,15 bis 0,20 g/l und die von d) im Bereich von 0,15 bis 0,25 g/l.

In einer ganz besonders bevorzugten Ausführungsform liegt die Konzentration von a) bei ca. 30 mg/l, die von b) bei ca. 0,45 g/l, die von c) bei ca. 0,17 g/l und die von d) bei ca. 0,2 g/l.

Die erfindungsgemäße Zusammensetzung weist vorzugsweise einen pH-Werte im Bereich von 0,5 bis 5,5, weiter bevorzugt von 2 bis 5,5, besonders bevorzugt von 3,5 bis 5,3 und ganz besonders bevorzugt von 4,0 bis 4,8. Der pH-Wert wird vorzugsweise mit Salpetersäure und/oder Ammonium eingestellt.

Vorzugsweise enthält die Zusammensetzung als Komponente a) mindestens ein Organoalkoxysilan, Organosilanol, Polyorganosilanol, Organosiloxan und/oder Polyorganosiloxan mit jeweils mindestens einer Amino-Gruppe, Harnstoff-Gruppe, Imido-Gruppe, Imino-Gruppe und/oder Ureido-Gruppe pro Organoalkoxysilan/Organosilanoleinheit. Weiter bevorzugt ist die Komponente a) mindestens ein Organoalkoxysilan, Organosilanol, Polyorganosilanol, Organosiloxan und/oder Polyorganosiloxan mit jeweils mindestens einer, insbesonders mit ein bis zwei Aminogruppen pro Organoalkoxysilan/Organosilanoleinheit. Besonders bevorzugt ist 2-Aminoethyl-3-amino-propyltrimethoxysilan, 2-Aminoethyl-3-aminopropyltriethoxysilan, Bis(trimethoxysilylpropyl)amin oder Bis(triethoxysilylpropyl)amin oder eine Kombination aus diesen als Organoalkoxysilan/Organosilanoleinheit. Ganz besonders bevorzugt ist 2-Aminoethyl-3-amino-propyltrimethoxysilan oder Bis(trimethoxysilylpropyl)amin oder eine Kombination aus beiden als Organoalkoxysilan/Organosilanoleinheit.

Unter Polyorganosiloxanen werden im Sinne dieser Erfindung solche Verbindungen verstanden, die mit mindestens einem Organosiloxan gebildet werden können, wobei kein Polydimethylsiloxan zugesetzt ist, und die keine Silicone sind.

Vorzugsweise enthält die Zusammensetzung als Komponente b) mindestens ein Komplexfluorid ausgewählt aus der Gruppe bestehend aus den Komplexfluoriden von Titan, Zirkonium, Hafnium, Aluminium und Silicium.

Weiter bevorzugt ist hier Zirkoniumkomplexfluorid. Dabei kann Zirkonium auch als Zirkonylnitrat, Zirkonylacetat oder Zirkoniumnitrat, bevorzugt als Zirkonylnitrat zugeben werden. Dies gilt entsprechend für Titan, Hafnium, Aluminium und Silicium.

Dabei liegt der Gehalt des mindestens einen Komplexfluorids für das Konzentrat vorzugsweise im Bereich von 1 bis 100 g/l, weiter bevorzugt 20 bis 75 g/l und besonders bevorzugt im Bereich von 40 bis 50 g/l, berechnet als Hexafluorozirkoniumsäure. Für das Behandlungsbad liegt die Konzentration vorzugsweise im Bereich von 0,05 bis 4 g/l, bevorzugt 0,15 bis 1,5 g/l und besonders bevorzugt bei ca. 0,45 g/l.

In einer bevorzugten Ausführungsform enthält die Zusammensetzung mindestens zwei verschiedene Komplexfluoride, insbesondere Komplexfluoride von zwei verschiedenen Metallkationen und besonders bevorzugt Komplexfluoride von Titan und von Zirkonium.

Überaschenderweise wurde gefunden, dass die erfindungsgemäße Zusammensetzung mehr als 80 mg/l, bevorzugt bis zu 300 mg/l und besonders bevorzugt bis zu 600 mg/l an Aluminium (berechnet als Metall) toleriert. Dies stellt einen großen Vorteil dar, bedenkt man die Alterung des Behandlungsbades, d.h. das Herauslösen von Aluminiumionen aus der behandelten metallischen Oberfläche.

Das mindestens eine Copolymer der Komponente c) weist in alternierender Konfiguration Monomereinheiten, welche mindestens eine Carbonsäuregruppe und/oder Phosphonsäuregruppe enthalten, und Monomereinheiten, welche keine Säuregruppe enthalten, auf.

Bei den Monomereinheiten, welche mindestens eine Carbonsäuregruppe und/oder Phosphonsäuregruppe enthalten, handelt es sich beispielsweise um (Meth)Acrylsäure, Vinylessigsäure, Itaconsäure, Maleinsäure und/oder Vinylphosphonsäure.

Vorzugsweise weisen diese Monomereinheiten jeweils mindestens eine Carbonsäuregruppe auf. Weiter bevorzugt weisen sie jeweils mindestens zwei Carbonsäuregruppen auf. Besonders bevorzugt weisen sie jeweils genau zwei Carbonsäuregruppen auf. Ganz besonders bevorzugt ist hier Maleinsäure.

Weist das mindestens eine Copolymer der Komponente c) Maleinsäure als Monomereinheit auf, so kann diese teilweise in Form des Anhydrids vorliegen. Dies ist der Fall, wenn das der erfindungsgemäßen Zusammensetzung bzw. dem Konzentrat zugesetzte Copolymer Maleinsäure-Anhydrid enthält und in der erfindungsgemäßen Zusammensetzung bzw. im Konzentrat noch keine vollständige Hydrolyse zu Maleinsäure stattgefunden hat.

Die Monomereinheiten, welche keine Säuregruppe enthalten, können entweder unpolar oder polar sein. Das mindestens eine Copolymer kann aber auch als Monomereinheiten, welche keine Säuregruppe enthalten, eine Mischung von unpolaren und polaren Monomereinheiten, aufweisen.

Als unpolare Monomereinheiten kommen insbesondere Alkylene, wie beispielsweise Ethylen, Propylen und/oder Butylen, und/oder Styrol in Betracht.

Als polare Monomereinheiten kommen insbesondere Vinylalkohol und/oder Vinylacetat und/oder Vinylether, wie beispielsweise Methylvinylether, Ethylvinylether, Propylvinylether und/oder Butylvinylether, und/oder Alkylenoxide, wie beispielsweise Ethylenoxid, Propylenoxid und/oder Butylenoxid, und/oder Ethylenimin und/oder (Meth)acrylsäureester und/oder (Meth)acrylamid in Betracht.

Die Länge der Kohlenwasserstoffketten in den Monomereinheiten, welche keine Säuregruppe enthalten, ist lediglich durch die resultierende Hydrophobizität dieser Monomere und somit durch die Wasserlöslichkeit der resultierenden erfindungsgemäßen Copolymere beschränkt.

Vorzugsweise sind die Monomereinheiten, welche keine Säuregruppe enthalten, Vinylether. Weiter bevorzugt ist hier Methylvinylether und/oder Ethylvinylether, besonders bevorzugt Methylvinylether.

Durch die Zugabe eines erfindungsgemäß eingesetzten Copolymers lassen sich die Eigenschaften der gebildeten Beschichtungen, insbesondere die Fähigkeit als Haftvermittler für weitere Schichten zu dienen, deutlich verbessern.

Während der Behandlung der metallischen Oberfläche mit einer sauren wässrigen Zusammensetzung kommt es zu einem Beizen der Oberfläche und in der Folge zur Ausbildung eines pH-Gradienten mit zunehmendem pH-Wert zur Oberfläche hin. Das Copolymer enthält Säuregruppen, welche bei dem an der Oberfläche erhöhten pH-Wert zumindest teilweise dissoziieren. Dies führt zu negativen Ladungen am Copolymer, welche wiederum zu einer elektrostatischen Anlagerung des Copolymers an die metallische Oberfläche führen. Das so angelagerte Copolymer dient als Adhäsionsvermittler bei der Abscheidung von Organosiloxanen und/oder Polyorganosiloxanen - aus der Komponente a) - sowie Metalloxiden - aus der Komponente b) und der Komponente d).

Die Eigenschaften der gebildeten Beschichtungen werden dadurch verbessert. Wichtig ist jedoch hierbei, dass die Anlagerung des Copolymers nicht dazu führt, dass der Beizangriff auf die metallische Oberfläche in einem solchen Maße vermindert wird, dass sich der pH-Gradient nur noch ungenügend oder gar nicht mehr ausbilden kann - wie dies bei den im Stand der Technik verwendeten Polymeren der Fall ist.

Der pH-Gradient, genauer der erhöhte pH-Wert an der Oberfläche, ist nämlich Voraussetzung für die Abscheidung von Organosiloxanen und/oder Polyorganosiloxanen sowie Metalloxiden.

Bei den im Stand der Technik verwendeten Polymeren ist die negative Ladungsdichte zu hoch, weshalb die Anlagerung dieser Polymere an die behandelte metallische Oberfläche zu stark ist.

Die erfindungsgemäß eingesetzten Copolymere enthalten zwar Gruppen, welche nach entsprechender Dissoziation eine negative Ladung aufweisen. Allerdings ist die negative Ladungsdichte durch die alternierende Anordnung mit neutralen Monomeren so gewählt, dass es zwar zu einer hinreichenden, jedoch nicht zu einer zu starken Anlagerung der Copolymere an die behandelte metallische Oberfläche kommt.

In einer bevorzugten Ausführungsform enthält die erfindungsgemäße Zusammensetzung als Komponente c) Poly(methylvinylether-a/f-Maleinsäure).

Die erfindungsgemäß eingesetzten Copolymere weisen vorzugsweise einen Polymerisationsgrad bezogen auf zwei Monomereinheiten in alternierender Konfiguration von 25 bis 5700, weiter bevorzugt von 85 bis 1750, besonders bevorzugt von 170 bis 1300 und ganz besonders bevorzugt von 225 bis 525 auf. Ihr zahlenmittleres Molekulargewicht liegt vorzugsweise bei 5.000 bis 1.000.000 g/mol, weiter bevorzugt bei 15.000 bis 300.000 g/mol, besonders bevorzugt bei 30.000 bis 225.000 g/mol und ganz besonders bevorzugt bei 40.000 bis 90.000 g/mol.

In einer ganz besonders bevorzugten Ausführungsform enthält die Zusammensetzung als Komponente c) Poly(methylvinylether-*alt*-Maleinsäure) mit einem zahlenmittleren Molekulargewicht im Bereich von 40.000 bis 60.000 g/mol, bevorzugt von ca. 48.000 g/mol.

In einer weiteren ganz besonders bevorzugten Ausführungsform enthält die Zusammensetzung als Komponente c) Poly(methylvinylether-*alt*-Maleinsäure) mit einem zahlenmittleren Molekulargewicht im Bereich von 70.000 bis 90.000 g/mol, bevorzugt von ca. 80.000 g/mol.

Diese alternierenden Copolymere können beispielsweise von der Firma Ashland (Gantrez 119 AN) bzw. Sigma-Aldrich bezogen werden.

Vorzugsweise enthält die Zusammensetzung als vorteilhafte Komponente d) mindestens eine Art von Kation ausgewählt aus der Gruppe bestehend aus den Kationen von Cer und weiteren Lanthaniden, Chrom, Eisen, Kalzium, Kobalt, Kupfer, Magnesium, Mangan, Molybdän, Nickel, Niob, Tantal, Yttrium, Vanadium, Lithium, Bismut, Zink und Zinn, weiter bevorzugt von Eisen, Mangan, Molybdän und Zink. Besonders bevorzugt enthält sie Mangankationen in der Oxidationsstufe +II. Gegebenenfalls umfasst die erfindungsgemäße Zusammensetzung bzw. das Konzentrat - je nach spezifischen Anforderungen bzw. Gegebenheiten - zusätzlich noch eine Komponente e). Diese ist mindestens eine Verbindung ausgewählt aus der Gruppe bestehend aus pH-Wert beeinflussenden Substanzen, organischen Lösemitteln, wasserlöslichen Fluor-Verbindungen und Nanopartikeln.

Das Konzentrat weist für die Komponente e) vorzugsweise einen Gehalt im Bereich von 0 bis 200 g/l auf. Im Behandlungsbad liegt die Konzentration der Komponente e) vorzugsweise im Bereich von 0,1 bis 20 g/l.

Die pH-Wert beeinflussende Substanzen sind vorzugsweise ausgewählt aus der Gruppe bestehend aus Salpetersäure, Schwefelsäure, Essigsäure, Flusssäure, Ammonium/Ammoniak und Natronlauge. Weiter bevorzugt ist hier Salpetersäure und/oder Ammonium.

Die organischen Lösemittel sind vorzugsweise ausgewählt aus der Gruppe bestehend aus Methanol und Ethanol. So sind in der Praxis Methanol und/oder Ethanol als Reaktionsprodukte der Organoalkoxysilan-Hydrolyse in den Behandlungsbädern bzw. Konzentraten vorhanden.

Die wasserlöslichen Fluorverbindungen sind vorzugsweise ausgewählt aus der Gruppe bestehend aus fluoridhaltigen Verbindung und Fluorid-Anionen.

Freies Fluorid ist insbesondere für die Initiierung der Schichtbildung zwar vorteilhaft, wirkt sich jedoch nachteilig auf die Schichthaftung auf.

Für das Konzentrat liegt der Gehalt an Gesamtfluorid daher im Bereich von 1,5 bis 15 g/l, bevorzugt 2,5 bis 10 g/l und besonders bevorzugt im Bereich von 3 bis 5 g/l, berechnet als F⁻. Für das Behandlungsbad liegt entsprechend der Gehalt an freiem Fluorid im Bereich von 0,015 bis 0,15 g/l, bevorzugt 0,025 bis 0,1 g/l und besonders bevorzugt im Bereich von 0,03 bis 0,05 g/l.

Die Nanopartikel sind vorzugsweise Metalloxidpartikel, weiter bevorzugt Metalloxidpartikel ausgewählt aus der Gruppe bestehend aus ZnO, SiO₂, CeO₂, ZrO₂ und TiO₂.

Bevorzugt enthält die erfindungsgemäße Zusammensetzung bzw. das Konzentrat noch mindestens eine Art Kationen ausgewählt aus der Gruppe bestehend aus Alkalimetallionen, Ammoniumionen und entsprechenden Verbindungen. Besonders bevorzugt enthält sie bzw. es Ammoniumionen.

Die Zusammensetzung bzw. das Konzentrat kann außerdem phosphor- und sauerstoffhaltige Verbindungen wie Phosphate und/oder Phosphonate enthalten. Zudem kann sie bzw. es Nitrat aufweisen.

Der Gehalt an schwefelhaltigen Verbindungen, insbesondere Sulfat, sowie Nitrit sollte jedoch vorzugsweise so gering wie möglich gehalten werden. Der Gehalt an schwefelhaltigen Verbindungen liegt besonders bevorzugt unter 100 mg/l berechnet als Schwefel. Der Gehalt an Nitrit liegt besonders bevorzugt unter 5 mg/l.

Die zu behandelnde metallische Oberfläche, welche gegebenenfalls zuvor gereinigt und/oder gebeizt wurde, kann mit der erfindungsgemäßen Zusammensetzung bespritzt, in diese getaucht oder mit dieser geflutet werden. Es ist auch möglich, die erfindungsgemäße Zusammensetzung manuell durch Wischen oder Pinseln oder mit Rollen oder Walzen (Coilcoating-Verfahren) auf die zu behandelnde metallische Oberfläche aufzutragen. Möglich ist zudem eine elektrolytische Abscheidung der erfindungsgemäßen Zusammensetzung auf der zu behandelnden metallischen Oberfläche.

Die Behandlungsdauer liegt bei der Teile-Behandlung vorzugsweise im Bereich von 15 Sekunden bis 20 Minuten, weiter bevorzugt 30 Sekunden bis 10 Minuten und besonders bevorzugt im Bereich von 45 Sekunden bis 5 Minuten. Die Behandlungstemperatur liegt vorzugsweise im Bereich von 5 bis 50, weiter bevorzugt 15 bis 40 und besonders bevorzugt im Bereich von 25 bis 30 °C.

Das erfindungsgemäße Verfahren ist auch für die Beschichtung von Bändern (Coils) geeignet. Die Behandlungsdauer liegt hier vorzugsweise im Bereich von wenigen Sekunden bis einigen Minuten, etwa im Bereich 1 bis 1.000 Sekunden.

Bei den zu behandelnden metallischen Oberflächen handelt es sich vorzugsweise um solche auf Basis von Aluminium, Magnesium, Eisen, Stahl, Zink, Zinn, Silicium, Nickel und/oder deren Legierungen.

Weiter bevorzugt enthält die zu behandelnde metallische Oberfläche Aluminium oder eine Aluminiumlegierung, besonders bevorzugt besteht die metallische Oberfläche aus Aluminium oder einer Aluminiumlegierung (Aluminiumwerkstoff) und ganz besonders bevorzugt besteht sie aus einer Aluminiumlegierung.

Besonders geeignet ist das erfindungsgemäße Verfahren für alle AluminiumLegierungen, ganz besonders für Aluminium-Magnesium-Legierungen, insbesondere AA5005, sowie für Aluminium-Magnesium-Silicium-Legierungen, insbesondere AA6060 bzw. AA6063. Prinzipiell ist es jedoch für alle Legierungen der sog. AA1000er-, AA2000er-, AA3000er-, AA4000er-, AA5000er-, AA6000er-, AA7000ersowie AA8000er Serie geeignet.

Mit dem erfindungsgemäßen Verfahren lässt sich im gleichen Bad ein Mix aus verschiedenen metallischen Werkstoffen beschichten (sog. Multimetallfähigkeit).

Die im erfindungsgemäßen Verfahren ausgebildeten Beschichtungen weisen vorzugsweise ein mittels RFA (Röntgenfluoreszenzanalyse) bestimmtes Schichtgewicht auf von:
i) 0,1 bis 50, weiter bevorzugt 1 bis 40 und besonders bevorzugt 2 bis 10 mg/m² bezogen nur auf Komponente a), berechnet als Silicium, und/oder
ii) 0,5 bis 200, weiter bevorzugt 2 bis 50 und besonders bevorzugt 3 bis 40 mg/m², bezogen nur auf Komponente b), berechnet als Zirkonium.

Die mit dem erfindungsgemäßen Verfahren hergestellten Beschichtungen dienen als Korrosionsschutz sowie Haftvermittler für weitere Beschichtungen.

So lassen sie sich leicht mit mindestens einem Primer, Lack, Klebstoff und/oder einer lackähnlichen organischen Zusammensetzung weiter beschichten. Dabei kann vorzugsweise mindestens eine dieser weiteren Beschichtungen durch Erwärmen und/oder Bestrahlen gehärtet werden.

Die mit dem erfindungsgemäßen Verfahren hergestellten Beschichtungen werden vor einer weiteren Behandlung vorzugsweise gespült, um überschüssiges Polymer sowie störende Ionen von der metallischen Oberfläche zu entfernen. Die erste weitere Beschichtung kann im Nass-in-nass-Verfahren aufgebracht werden.

Als Lack kann ein Pulverlack beispielsweise auf Basis von Polyester und/oder Epoxidharz oder Polyacrylat oder PVDF, ein Nasslack beispielsweise auf Basis einer Polyacrylatdispersion oder PVDF oder ein Elektrotauchlack aufgebracht werden. Vor allem bei Aluminiumwerkstoffen, insbesondere bei Aluminium-Magnesium-Legierungen wie AA5005 oder Aluminium-Magnesium-Silicium-Legierungen wie AA6060 konnte so nach Beschichtung mit dem erfindungsgemäßen Verfahren eine stark verbesserte Haftung von Pulverlacken, insbesondere solchen auf Basis von Polyester, Epoxidharz oder deren Mischungen, sowie von Nasslacken auf Basis einer Polyacrylatdispersion festgestellt werden.

Dies zeigt sich beispielsweise im Vergleich zur Behandlung mit einer sauren wässrigen Zusammensetzung, welche sich von der erfindungsgemäßen Zusammensetzung nur darin unterscheidet, dass sie Polyacrylat und nicht das erfindungsgemäße Copolymer enthält.

Die mit dem erfindungsgemäßen Verfahren beschichteten metallischen Substrate werden in der Automobilindustrie, für Schienenfahrzeuge, in der Luftund Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen vorzugsweise in der Automobil- oder Luftfahrtindustrie, für die Herstellung von Geräten oder Anlagen, insbesondere von Haushaltsgeräten, Kontrolleinrichtungen, Prüfeinrichtungen oder Konstruktionselementen, verwendet, weshalb sich die vorliegende Erfindung auch auf diese Verwendungen bezieht.

Bevorzugt ist die Verwendung der beschichteten metallischen Substrate im Bereich des Aluminium-Finishings, also der architektonischen Konstruktionselemente aus Aluminium oder Aluminiumlegierungen im Innen- und Außenbereich, insbesondere im Fenster-, Fassaden- sowie Dachbau.

Die vorliegende Erfindung soll durch die folgenden, nicht einschränkend zu verstehenden Ausführungsbeispiele verdeutlicht werden. **Ausführungsbeispiele:**

### i) Substrate und Vorbehandlung

### Substrate

Als Substrate wurden Bleche (10,5 x 19 cm) aus der Aluminium-Magnesium-Legierung AA5005, Bleche (10,5 x 19 cm) aus dem Stahl ZM 150, Bleche (10,5 x 19 cm) aus kaltgewalztem Stahl (CRS), Bleche aus feuerverzinktem Stahl (HDG) sowie Profile (12 x 6 cm) aus der Aluminium-Magnesium-Silicium-Legierung AA6060 eingesetzt.

### Reinigung

Als mildalkalischer Tauchreiniger wurde in allen Beispielen und Vergleichsbeispielen Gardoclean^{®} T 5374/2 (Fa. Chemetall; enthält Phosphat, Borat und Tensid) verwendet. Dazu wurden 30 g/l in einem 50 I-Bad angesetzt, auf 60 °C erhitzt und die Substrate unter moderatem Rühren für 3 min. bei einem pH-Wert zwischen 9,5 und 10,5 gereinigt. Anschließend wurden die Substrate in Kaskade mit Wasser gespült und direkt zur Beizbehandlung überführt.

### Beizen

Als stark saure Beize wurde in allen Beispielen (außer **B36** und **B37:** keine Beize) und Vergleichsbeispielen ein Tauchbad mit Gardoclean^{®} T 5491 (Fa. Chemetall; enthält Schwefelsäure und Tensid) verwendet. Dazu wurden im 50 I-Ansatz 25 g/l Gardoclean^{®} T 5491 mit 12 g/l Gardobond^{®}-Additiv 7269 (Fa. Chemetall; enthält Flusssäure) vermischt und auf 45 °C erhitzt. Die Substrate wurden unter moderatem Rühren und bei einem pH-Wert von weniger als 2 jeweils solange gebeizt, bis der gewünschte Beizabtrag erreicht wurde. Dieser war in der Regel 1 g/m². Anschließend wurden die Substrate vor der unmittelbar folgenden Konversionsbehandlung in Kaskade mit VE-Wasser gespült.

### (Erfindungsgemäße) Konversionsbehandlung

Für das Konversionsbad wurden verschiedene Mengen Oxsilan^{®} AL 0510 (Fa. Chemetall; enthält 2-Aminoethyl-3-amino-propyltrimethoxysilan und Bis(trimethoxysilylpropyl)amin) und Oxsilan^{®}-Additiv 9905 (Fa. Chemetall; enthält Fluorid, eine Zirkoniumverbindung und eine Manganverbindung) im 50 I-Ansatz angesetzt. Die Badtemperatur wurde jeweils auf 30 °C eingestellt. Der pH-Wert und der Fluoridgehalt wurden durch Zugabe von verd. Ammoniaklösung und verd. Ammoniumfluoridlösung eingestellt. Der Aluminiumgehalt wurde durch Zugabe von Aluminiumnitrat (Al(NO₃)₃ x 9H₂O; Fa. Merck) in das frische Oxsilan^{®} AL 0510-Bad eingestellt. Dabei wurde der pH-Wert sowie der freie Fluoridgehalt kontinuierlich durch Zugabe von verd. Ammoniaklösung und verd. Ammoniumfluoridlösung korrigiert.

Gegebenenfalls wurde dem Bad eines der Polymere A, B oder C in unterschiedlicher Konzentration zugesetzt. Dabei handelte es sich bei Polymer A um Poly(methylvinylether-*alt*-Maleinsäure) (Mₙ = 48.000; Fa. Ashland), bei Polymer B um Polyacrylsäure (M_{w} = 113.000; Mₙ = 20.000; Fa. DSM) und bei Polymer C um Poly(methylvinylether-*alt*-Maleinsäure) (Mₙ = 80.000; Fa. Sigma-Aldrich).

Vor dem Durchsatz von Substraten wurde das fertige Bad jeweils 2 h altern gelassen, um eine Einstellung eines chemischen Gleichgewichts innerhalb des Bades sicherstellen zu können. Die Konversionsbehandlung wurde für 90 Sek. unter mäßigem Rühren durchgeführt. Anschließend wurde mit VE-Wasser gespült.

### ii) Analytik, Lackierung, Haftfestigkeit und Korrosionsschutz

Die in **Tab. 1** bis **Tab. 3** aufgeführten Schichtgewichte (SG) sowie Gitterschnitt- und Korrosions-Ergebnisse sind Durchschnittswerte aus jeweils bis zu 8 Blechen/Profilen.

### Röntgenfluorenzenzanalyse

Die Schichtgewichte (SG) in mg/m² auf den vorbehandelten Substraten wurden mittels Röntgenfluorenzenzanalyse (RFA) ermittelt. Dabei wurden die Auflagen von Zirkonium und Silicium gemessen.

### Lackierung

Für die Beispiele **B1** bis **B5, B35** bis **B37** sowie die Vergleichsbeispiele **VB1** bis **VB5** wurde der Pulverlack Interpon D1036 (Fa. Akzo Nobel; Lack D in **Tab.** 3) verwendet, für die Beispiele **B6** bis **B34** die Nasslacke VERNICRON (Fa. Monopol Colors; Lack A in **Tab.** 3) sowie Skincoat (RAL 9016) und Skincoat 8502 (RAL 9005) (jeweils Fa. Mechernich/HD-Wahl; Lack B bzw. C in **Tab.** 3). Die Schichtdicke der Pulverlackschicht wurde mittels Ultraschalladsorption bestimmt. Sie lag im Bereich von 60 bis 120 µm.

Zur Ermittlung der Haftfestigkeit von Pulverlacken wurden entsprechend lackierte Proben beispielweise in Wasser gekocht, mit einem Gitterschnitt versehen und dann einem Kugelfalltest von der Rückseite ("Reverse-Impact") ausgesetzt. Je weniger Lack dabei abplatzte, desto höher wurde die Haftfestigkeit des Lackes bewertet.

### Kochtest

Nach der Lackierung wurden die Substrate für 24 h gelagert. Anschließend wurde gemäß GSB AL 631 (Internationale Qualitätsrichtlinien für Beschichtung von Bauteilen aus Aluminium vom 05.08.2013) ein Kochtest für 2 h in VE-Wasser durchgeführt.

### Gitterschnitt-Test

Nach dem Kochtest wurden die Bleche für 1 h bei Raumtemperatur zwischengelagert. Sodann wurden gemäß DIN EN ISO 2409 (in der Version von 2013) Gitterschnitte ausgeführt. Die Haftfestigkeit wurde dann sofort oder nach erfolgtem Kugelschlagtest bestimmt, wobei "0" den bestmöglichen Wert und "5" den schlechtestmöglichen darstellt. Ein Wert von 0 oder 1 stellt ein gutes Ergebnis dar.

### Kugelschlag

Für den Kugelschlagtest wurde ein Gerät gemäß ASTM D2794 (in der Version von 2010) mit einem Kugeldurchmesser von 15,9 mm verwendet. Der Kugelschlag erfolgte dabei aus einer Fallhöhe von 25 cm (einfache GSB-Anforderung) oder 50 cm (doppelte GSB-Anforderung).

### Korrosionstests

Es wurden zudem drei verschiedene Korrosionstests durchgeführt:
- die Bestimmung der Beständigkeit gegen Feuchtigkeit - Teil 2: Verfahren zur Beanspruchung von Proben in Kondenswasserklimaten (KWK-Test) gemäß DIN EN ISO 6270-2 CH (in der Version von 2005),
- die Essigsäure-Salzsprühnebelprüfung (AASS-Test) gemäß DIN EN ISO 9227 (in der Version von 2012) sowie
- der Filiform-Test (mit HCl) gemäß DIN EN 3665 (in der Version von 1997). Beim Filiform-Test wurde die Schädigung analog der mittleren Unterwanderung nach DIN EN ISO 4628-8 (in der Version von 2013) bzw. LPV 4 (in der Version von 2012) bestimmt.

### iii) Ergebnisse und Diskussion

**Tab. 1** zeigt, dass sich bei Verwendung einer erfindungsgemäßen Polymer A enthaltenden Zusammensetzung **(B1** bis **B5)** nach einer Pulverlackierung sehr gute Gitterschnitt-Ergebnisse ("0" oder "0-1") erzielen lassen, während nicht-erfindungsgemäße Zusammensetzungen, welche kein Polymer **(VB1** bis **VB4)** bzw. Polymer B **(VB5)** beinhalten, zu sehr schlechten Werten im Gitterschnitt-Test ("4" oder "5") führen.

Tab. **2** ist zu entnehmen, dass sich durch die nicht-erfindungsgemäße Zugabe des Polymers B zur Behandlungslösung zwar eine gewisse Verbesserung der Korrosions-Ergebnisse beim AASS- sowie beim Filiform-Test einstellt (niedrigere Werte für Del._{max.} bzw. I bei **VB5** im Vergleich zu **VB1).** Durch den erfindungsgemäßen Einsatz des Polymers A **(B1** und **B2)** ist diese Verbesserung jedoch stärker ausgeprägt (AASS-Test: niedrigerer Wert für Del._{max.} bzw. Filiform-Test: deutlich niedrigere Werte für H und I).

Aus **Tab. 3** ist zu entnehmen, dass auch bei Nasslackierung mit verschiedenen Lacken (Lack A, B und C) und auf verschiedenen Substraten (AA5005 und AA6060) sehr gute Gitterschnitt-Ergebnisse erreicht werden. Außerdem demonstriert **Tab. 3,** dass das erfindungsgemäße Verfahren nicht auf Aluminiumwerkstoffe beschränkt ist, sondern sich vielmehr auch bei anderen Metallsubstraten hervorragende Gitterschnitt-Ergebnisse erzielen lassen **(B35** bis **B37).**

Aus **Tab. 1** und **3** ist zudem ersichtlich, dass das erfindungsgemäße Verfahren auch bei einem hohen Gehalt an Aluminium erfolgreich durchgeführt werden kann.

Bei sämtlichen in **Tab. 1** und **Tab. 2** aufgeführten (Vergleichs-)Beispielen wurde die Aluminium-Magnesium-Legierung AA5005 als Substrat sowie der Pulverlack Interpon D1036 (Fa. Akzo Nobel) verwendet.

Die Badkonzentration an Fluor (F) betrug bei allen Beispielen der **Tab. 3** 30 mg/l **(B35:** 80 mg/l), die an Aluminium (Al) 150 mg/l **(B35:** 500 mg/l).

**Tabelle 1:**

| (Vgl.-) Bsp. | Bad-Konzentration (mg/l) | | | | | pH | Polym. (g/l) | SG (mg/m²) | | Gittersch. (0-5) |
|---|---|---|---|---|---|---|---|---|---|---|
| | Zr | Si | F | Al | Mn | | | Zr | Si | |
| VB1 | 200 | 30 | 30 | 150 | 170 | 4,2 | - | 42 | 6 | 4-5 |
| B1 | 200 | 30 | 30 | 150 | 170 | 4,2 | A: 0,085 | 39 | 3 | 0-1 |
| B2 | 200 | 30 | 30 | 150 | 170 | 4,2 | A: 0,68 | 21 | 2 | 0 |
| VB2 | 170 | 10 | 90 | 550 | 145 | 3,8 | - | 15 | 2 | 5 |
| B3 | 170 | 10 | 90 | 550 | 145 | 3,8 | A: 0,17 | n.g. | n.g. | 0 |
| VB3 | 170 | 10 | 30 | 550 | 145 | 4,8 | - | 42 | 2 | 4 |
| B4 | 170 | 10 | 30 | 550 | 145 | 4,8 | A: 0,17 | n.g. | n.g. | 0 |
| VB4 | 230 | 10 | 30 | 550 | 195 | 4,3 | - | 51 | 2 | 5 |
| B5 | 230 | 10 | 30 | 550 | 195 | 4,3 | A: 0,17 | 45 | 2 | 0 |
| VB5 | 200 | 30 | 30 | 150 | 170 | 4,2 | B: 0,17 | 41 | 2 | 5 |

**Tabelle 2:**

| (Vgl.-) Bsp. | Polymer (g/l) | KWK-Test | | AASS-Test | | Filiform-Test | | |
|---|---|---|---|---|---|---|---|---|
| | | Del._{max.} (mm) | Blister | Del._{max.} (mm) | Blister | I (mm) | H (1/10 mm) | F |
| VB1 | - | 0 | 0 | 0,9 | 0 | 0,45 | 6,0 | 0,24 |
| B1 | A: 0,1 | 0 | 0 | 0,7 | 0 | 0,42 | 4,3 | 0,18 |
| B2 | A: 0,8 | 0 | 0 | 0,7 | 0 | 0,41 | 3,2 | 0,13 |
| VB5 | B: 0,2 | n.g. | n.g. | 0,8 | 0 | 0,41 | 6,0 | 0,24 |

**Tabelle 3:**

| Bsp. | Subst. | Lack | Bad-Konz. (mg/l) | | | pH | Polym. (g/l) | SG (mg/m²) | | Gitterschnitt (0-5) | | |
|---|---|---|---|---|---|---|---|---|---|---|---|---|
| | | | Zr | Si | Mn | | | Zr | Si | - | 25 cm | 50 cm |
| B6 | AA5005 | A | 200 | 30 | 170 | 4,2 | A: 0,17 | 22 | 2 | n.g. | 0-1 | 1 |
| B7 | AA5005 | A | 200 | 30 | 170 | 4,2 | C: 0,034 | 37 | 3 | n.g. | 1 | 0-1 |
| B8 | AA6060 | B | 200 | 30 | 170 | 4,2 | A: 0,17 | 1 | 22 | 1 | n.g. | n.g. |
| B9 | AA6060 | B | 200 | 30 | 170 | 4,2 | A: 0,34 | 1 | 17 | 1 | n.g. | n.g. |
| B10 | AA6060 | B | 200 | 30 | 170 | 4,2 | A: 0,68 | 1 | 9 | 1 | n.g. | n.g. |
| B11 | AA6060 | B | 80 | 30 | 65 | 4,0 | A: 0,17 | 1 | 7 | 1 | n.g. | n.g. |
| B12 | AA6060 | B | 80 | 30 | 65 | 4,0 | A: 0,34 | 1 | 7 | 1 | n.g. | n.g. |
| B13 | AA6060 | B | 80 | 30 | 65 | 4,0 | A: 0,68 | 1 | 5 | 1 | n.g. | n.g. |
| B14 | AA6060 | B | 80 | 10 | 65 | 4,2 | A: 0,17 | < 1 | 12 | 1 | n.g. | n.g. |
| B15 | AA6060 | B | 80 | 10 | 65 | 4,2 | A: 0,34 | 1 | 12 | 1 | n.g. | n.g. |
| B16 | AA6060 | B | 80 | 10 | 65 | 4,2 | A: 0,68 | 1 | 4 | 1 | n.g. | n.g. |
| B17 | AA6060 | C | 50 | 30 | 40 | 4,2 | A: 0,17 | < 1 | 23 | 0 | n.g. | n.g. |
| B18 | AA6060 | C | 50 | 30 | 40 | 4,2 | A: 0,34 | < 1 | 14 | 0 | n.g. | n.g. |
| B19 | AA6060 | C | 50 | 30 | 40 | 4,2 | A: 0,68 | < 1 | 8 | 0 | n.g. | n.g. |
| B20 | AA5005 | C | 100 | 30 | 85 | 4,2 | A: 0,17 | 1 | 22 | n.g. | 1 | 1 |
| B21 | AA5005 | C | 100 | 30 | 85 | 4,2 | A: 0,34 | 1 | 12 | n.g. | 0 | 1 |
| B22 | AA5005 | C | 100 | 30 | 85 | 4,2 | A: 0,68 | < 1 | 6 | n.g. | 0 | 1 |
| B23 | AA6060 | C | 100 | 30 | 85 | 4,2 | A: 0,17 | 1 | 19 | 1 | n.g. | n.g. |
| B24 | AA6060 | C | 100 | 30 | 85 | 4,2 | A: 0,34 | 1 | 12 | 0 | n.g. | n.g. |
| B25 | AA6060 | C | 100 | 30 | 85 | 4,2 | A: 0,68 | 1 | 6 | 0-1 | n.g. | n.g. |
| B26 | AA6060 | C | 100 | 30 | 85 | 4,2 | A: 0,085 | 10 | 32 | 1 | n.g. | n.g. |
| B27 | AA5005 | C | 50 | 15 | 40 | 4,2 | A: 0,085 | 2 | 26 | n.g. | 1 | 1 |
| B28 | AA5005 | C | 50 | 15 | 40 | 4,2 | A: 0,17 | 1 | 20 | n.g. | 1 | 1 |
| B29 | AA6060 | C | 50 | 15 | 40 | 4,2 | A: 0,085 | 10 | 27 | 1 | n.g. | n.g. |
| B30 | AA6060 | C | 50 | 15 | 40 | 4,2 | A: 0,17 | 9 | 19 | 1 | n.g. | n.g. |
| B31 | AA5005 | C | 50 | 30 | 40 | 4,2 | A: 0,17 | 1 | 19 | n.g. | 0-1 | 1 |
| B32 | AA6060 | C | 50 | 30 | 40 | 4,2 | A: 0,085 | 8 | 25 | 1 | n.g. | n.g. |
| B33 | AA6060 | C | 50 | 30 | 40 | 4,2 | A: 0,17 | 9 | 19 | 0 | n.g. | n.g. |
| B34 | AA5005 | C | 100 | 30 | 85 | 4,2 | A: 0,17 | 2 | 28 | n.g. | 0 | 0 |
| B35 | ZM 150 | D | 250 | 40 | 210 | 4,5 | A: 0,17 | 57 | 1 | n.g. | 0-1 | 1 |
| B36 | CRS | D | 200 | 30 | 170 | 4,2 | A: 0,17 | 50 | 3 | 0 | n.g. | n.g. |
| B37 | HDG | D | 200 | 30 | 170 | 4,2 | A: 0,17 | 49 | 3 | 0 | n.g. | n.g. |

## Patentansprüche

1. Saure wässrige Zusammensetzung zur Beschichtung von metallischen Oberflächen, **dadurch gekennzeichnet, dass** sie neben Wasser
a) mindestens eine Verbindung ausgewählt aus der Gruppe bestehend aus Organoalkoxysilanen, Organosilanolen, Polyorganosilanolen, Organosiloxanen und Polyorganosiloxanen,
b) mindestens eine Verbindung ausgewählt aus der Gruppe bestehend aus Titan-, Zirkonium-, Hafnium- und Aluminium-Verbindungen und Siliciumkomplexfluorid, und
c) mindestens ein Copolymer, das zumindest bei einem Teilbereich des pH-Wertes unter 6 stabil ist und in alternierender Konfiguration Monomereinheiten, welche mindestens eine Carbonsäuregruppe und/oder Phosphonsäuregruppe enthalten, und Monomereinheiten, welche keine Säuregruppe enthalten, aufweist, umfasst,
wobei der Gehalt an freiem Fluorid im Bereich von 0,015 bis 0,15 g/l liegt, und zusätzlich
d) mindestens eine Art von Kation ausgewählt aus der Gruppe bestehend aus Kationen von Metallen der 1. bis 3. und 5. bis 8. Nebengruppe einschließlich Lanthaniden sowie der 2. Hauptgruppe des Periodensystems der Elemente sowie von Lithium, von Bismut und von Zinn und/oder mindestens eine entsprechende Verbindung umfasst, wobei
die Konzentration von a) im Bereich von 1 bis 200 mg/l, die von b) im Bereich von 0,05 bis 4 g/l, die von c) im Bereich von 0,02 bis 2 g/l und die von d) im Bereich von 0,02 bis 2 g/l liegt.

2. Zusammensetzung nach Anspruch 1, **dadurch gekennzeichnet, dass** ihr pH-Wert im Bereich von 2 bis 5,5 liegt.

3. Zusammensetzung nach einem der vorhergehenden Ansprüche, **dadurch gekennzeichnet, dass** die Komponente a) mindestens ein Organoalkoxysilan, Organosilanol, Polyorganosilanol, Organosiloxan und/oder Polyorganosiloxan mit jeweils mindestens einer Amino-Gruppe, Harnstoff-Gruppe, Imido-Gruppe, Imino-Gruppe und/oder Ureido-Gruppe pro Organoalkoxysilan/Organosilanoleinheit ist.

4. Zusammensetzung nach einem der vorhergehenden Ansprüche, **dadurch gekennzeichnet, dass** die Komponente b) mindestens ein Komplexfluorid ausgewählt aus der Gruppe bestehend aus den Komplexfluoriden von Titan, Zirkonium, Hafnium, Aluminium und Silicium ist.

5. Zusammensetzung nach einem der vorhergehenden Ansprüche, **dadurch gekennzeichnet, dass** in Komponente c) die Monomereinheiten, welche mindestens eine Carbonsäuregruppe und/oder Phosphonsäuregruppe enthalten, mindestens eine Carbonsäuregruppe aufweisen, und die Monomereinheiten, welche keine Säuregruppe enthalten, Alkylene, Styrol, Vinylalkohol, Vinylacetat, Vinylether, Ethylenimin, (Meth)acrylsäureester und/oder (Meth)acrylamid sind.

6. Zusammensetzung nach einem der vorhergehenden Ansprüche, **dadurch gekennzeichnet, dass** in Komponente c) die Monomereinheiten, welche mindestens eine Carbonsäuregruppe und/oder Phosphonsäuregruppe enthalten, zwei Carbonsäuregruppe aufweisen, und die Monomereinheiten, welche keine Säuregruppe enthalten, Vinylether sind.

7. Zusammensetzung nach einem der vorhergehenden Ansprüche, **dadurch gekennzeichnet, dass** in Komponente c) das mindestens eine Copolymer einen Polymerisationsgrad bezogen auf zwei Monomereinheiten in alternierender Konfiguration von 25 bis 5700 aufweist und/oder sein zahlenmittleres Molekulargewicht bei 5.000 bis 1.000.000 g/mol liegt.

8. Zusammensetzung nach einem der vorhergehenden Ansprüche, **dadurch gekennzeichnet, dass** die Komponente d) mindestens eine Art von Kation ausgewählt aus der Gruppe bestehend aus den Kationen von Cer und weiteren Lanthaniden, Chrom, Eisen, Kalzium, Kobalt, Kupfer, Magnesium, Mangan, Molybdän, Nickel, Niob, Tantal, Yttrium, Vanadium, Lithium, Bismut, Zink und Zinn ist.

9. Zusammensetzung nach einem der vorhergehenden Ansprüche, **dadurch gekennzeichnet, dass** sie zusätzlich noch eine Komponente e) umfasst, welche mindestens eine Verbindung ausgewählt aus der Gruppe bestehend aus pH-Wert beeinflussenden Substanzen, organischen Lösemitteln, wasserlöslichen FluorVerbindungen und Nanopartikeln ist.

10. Zusammensetzung nach einem der vorhergehenden Ansprüche, **dadurch gekennzeichnet, dass** sie mindestens eine Art Kationen ausgewählt aus der Gruppe bestehend aus Alkalimetallionen, Ammoniumionen und entsprechenden Verbindungen enthält.

11. Konzentrat, **dadurch gekennzeichnet, dass** aus ihm durch Verdünnen eine Zusammensetzung nach einem der vorhergehenden Ansprüche hergestellt werden kann.

12. Verfahren zur Beschichtung von metallischen Oberflächen, **dadurch gekennzeichnet, dass** eine metallische Oberfläche mit einer Zusammensetzung nach einem der Ansprüche 1 bis 10 in Kontakt gebracht wird.

13. Verfahren nach Anspruch 12, **dadurch gekennzeichnet, dass** die zu behandelnde metallische Oberfläche Aluminium oder eine Aluminiumlegierung enthält.

14. Verfahren nach einem der Ansprüche 12 oder 13, **dadurch gekennzeichnet, dass** die ausgebildeten Beschichtungen ein Schichtgewicht aufweisen von:
i) 0,1 bis 500 mg/m² bezogen nur auf Komponente a), berechnet als Silicium, und/oder
ii) 0,5 bis 200 mg/m² bezogen nur auf Komponente b), berechnet als Zirkonium.

15. Verfahren nach einem der Ansprüche 12 bis 14, **dadurch gekennzeichnet, dass** vor einer weiteren Behandlung gespült wird, um überschüssiges Polymer von der metallischen Oberfläche zu entfernen.

16. Verwendung von mit einem Verfahren nach einem der Ansprüche 12 bis 15 beschichteten metallischen Substrate in der Automobilindustrie, für Schienenfahrzeuge, in der Luft- und Raumfahrtindustrie, im Apparatebau, im Maschinenbau, in der Bauindustrie, in der Möbelindustrie, für die Herstellung von Leitplanken, Lampen, Profilen, Verkleidungen oder Kleinteilen, für die Herstellung von Karosserien oder Karosserieteilen, von Einzelkomponenten, vormontierten bzw. verbundenen Elementen, für die Herstellung von Geräten oder Anlagen, Kontrolleinrichtungen, Prüfeinrichtungen oder Konstruktionselementen.

## Claims

1. An acidic aqueous composition for coating metallic surfaces, **wherein** as well as water it comprises
a) at least one compound selected from the group consisting of organoalkoxysilanes, organosilanols, polyorganosilanols, organosiloxanes and polyorganosiloxanes,
b) at least one compound selected from the group consisting of titanium, zirconium, hafnium and aluminum compounds and silicon complex fluoride, and
c) at least one copolymer which at least in a sub-range of the pH below 6 is stable and comprises in alternating configuration monomer units which contain at least one carboxylic acid group and/or phosphonic acid group and monomer units which contain no acid group,
the free fluoride content being in the range from 0.015 to 0.15 g/l, and additionally comprises
d) at least one kind of cation selected from the group consisting of cations of metals from transition groups 1 to 3 and 5 to 8, including lanthanides, and also of main group 2 of the Periodic Table of the Elements and also of lithium, of bismuth and of tin, and/or at least one corresponding compound, where
the concentration of a) is in the range from 1 to 200 mg/l, that of b) is in the range from 0.05 to 4 g/l, that of c) is in the range from 0.02 to 2 g/l and that of d) is in the range from 0.02 to 2 g/l.

2. The composition according to claim 1, **wherein** its pH is in the range from 2 to 5.5.

3. The composition according to either of the preceding claims, **wherein** component a) is at least one organoalkoxysilane, organosilanol, polyorganosilanol, organosiloxane and/or polyorganosiloxane having in each case at least one amino group, urea group, imido group, imino group and/or ureido group per organoalkoxysilane/organosilanol unit.

4. The composition according to any of the preceding claims, **wherein** component b) is at least one complex fluoride selected from the group consisting of the complex fluorides of titanium, zirconium, hafnium, aluminum and silicon.

5. The composition according to any of the preceding claims, **wherein** the monomer units in component c) which contain at least one carboxylic acid group and/or phosphonic acid group comprise at least one carboxylic acid group, and the monomer units which contain no acid group are alkylenes, styrene, vinyl alcohol, vinyl acetate, vinyl ethers, ethyleneimine, (meth)acrylic esters and/or (meth)acrylamide.

6. The composition according to any of the preceding claims, **wherein** the monomer units in component c) which contain at least one carboxylic acid group and/or phosphonic acid group comprise two carboxylic acid groups, and the monomer units which contain no acid group are vinyl ethers.

7. The composition according to any of the preceding claims, **wherein** in component c) the at least one copolymer has a degree of polymerization based on two monomer units in alternating configuration of 25 to 5700 and/or its number-average molecular weight is 5000 to 1 000 000 g/mol.

8. The composition according to any of the preceding claims, **wherein** component d) is at least one kind of cation selected from the group consisting of the cations of cerium and other lanthanides, chromium, iron, calcium, cobalt, copper, magnesium, manganese, molybdenum, nickel, niobium, tantalum, yttrium, vanadium, lithium, bismuth, zinc and tin.

9. The composition according to any of the preceding claims, **wherein** it further comprises a component e) which is at least one compound selected from the group consisting of pH modifiers, organic solvents, watersoluble fluorine compounds and nanoparticles.

10. The composition according to any of the preceding claims, **wherein** it comprises at least one kind of cations selected from the group consisting of alkali metal ions, ammonium ions and corresponding compounds.

11. A concentrate **wherein** a composition according to any of the preceding claims may be produced therefrom by dilution.

12. A method for coating metallic surfaces, **wherein** a metallic surface is contacted with a composition according to any of claims 1 to 10.

13. The method according to claim 12, **wherein** the metallic surface for coating comprises aluminum or an aluminum alloy.

14. The method according to either of claims 12 and 13, **wherein** the coatings formed have a coat weight of:
i) 0.1 to 500 mg/m² based only on component a), calculated as silicon, and/or
ii) 0.5 to 200 mg/m² based only on component b), calculated as zirconium.

15. The method according to any of claims 12 to 14, **wherein** a further treatment is preceded by rinsing to remove excess polymer from the metallic surface.

16. The use of metallic substrates coated with a method according to any of claims 12 to 15 in the automotive industry, for rail vehicles, in the aerospace industry, in apparatus construction, in mechanical engineering, in the building industry, in the furniture industry, for producing vehicle barriers, lamps, profiles, linings or small parts, for producing bodywork or bodywork parts, individual components, preassembled and/or connected elements, for producing appliances or installations, control devices, testing devices or structural elements.

## Revendications

1. Composition aqueuse acide pour le revêtement de surfaces métalliques, **caractérisée en ce qu'**elle comprend, outre de l'eau,
a) au moins un composé choisi dans le groupe constitué par les organoalcoxysilanes, les organosilanols, les polyorganosilanols, les organosiloxanes et les polyorganosiloxanes,
b) au moins un composé choisi dans le groupe constitué par les composés de titane, de zirconium, de hafnium et d'aluminium et le fluorure complexe de silicium et
c) au moins un copolymère qui est stable au moins dans une plage partielle de pH inférieur à 6 et qui présente dans une configuration alternée des motifs monomères qui contiennent au moins un groupe acide carboxylique et/ou acide phosphonique et des motifs monomères qui ne contiennent pas de groupe acide,
la teneur en fluorure libre se situant dans la plage de 0,015 à 0,15 g/l et, en outre
d) au moins un type de cation choisi dans le groupe constitué par les cations de métaux du 1er au 3ème et du 5ème au 8ème groupe secondaire, y compris les lanthanides, ainsi que du 2ème groupe principal du système périodique des éléments ainsi que de lithium, de bismuth et d'étain et/ou au moins un composé correspondant,
la concentration en a) se situant dans la plage de 1 à 200 mg/l, celle en b) dans la plage de 0,05 à 4 g/l, celle en c) dans la plage de 0,02 à 2 g/l et celle en d) dans la plage de 0,02 à 2 g/l.

2. Composition selon la revendication 1, **caractérisée en ce que** son pH se situe dans la plage de 2 à 5,5.

3. Composition selon l'une quelconque des revendications précédentes, **caractérisée en ce que** le composant a) est au moins un organoalcoxysilane, un organosilanol, un polyorganosilanol, un organosiloxane et/ou un polyorganosiloxane présentant à chaque fois au moins un groupe amino, un groupe urée, un groupe imido, un groupe imino et/ou un groupe uréido par motif d'organoalcoxysilane/organosilanol.

4. Composition selon l'une quelconque des revendications précédentes, **caractérisée en ce que** le composant b) est au moins un fluorure complexe choisi dans le groupe constitué par les fluorures complexes du titane, du zirconium, du hafnium, de l'aluminium et du silicium.

5. Composition selon l'une quelconque des revendications précédentes, **caractérisée en ce que**, dans le composant c), les motifs monomères qui contiennent au moins un groupe acide carboxylique et/ou acide phosphonique présentent au moins un groupe acide carboxylique et les motifs monomères qui ne contiennent pas de groupe acide sont des alkylènes, le styrène, l'alcool vinylique, l'acétate de vinyle, le vinyléther, l'éthylène-imine, un ester de l'acide (méth)acrylique et/ou le (méth)acrylamide.

6. Composition selon l'une quelconque des revendications précédentes, **caractérisée en ce que**, dans le composant c), les motifs monomères qui contiennent au moins un groupe acide carboxylique et/ou acide phosphonique présentent deux groupes acide carboxylique et les motifs monomères qui ne contiennent pas de groupe acide sont des vinyléthers.

7. Composition selon l'une quelconque des revendications précédentes, **caractérisée en ce que**, dans le composant c), ledit au moins un copolymère présente un degré de polymérisation, par rapport aux deux motifs monomères en configuration alternée, de 25 à 5700 et/ou son poids moléculaire moyen en nombre se situe à 5000 jusqu'à 1.000.000 g/mole.

8. Composition selon l'une quelconque des revendications précédentes, **caractérisée en ce que** le composant d) est au moins un type de cation choisi dans le groupe constitué par les cations du cérium et des autres lanthanides, du chrome, du fer, du calcium, du cobalt, du cuivre, du magnésium, du manganèse, du molybdène, du nickel, du niobium, du tantale, de l'yttrium, du vanadium, du lithium, du bismuth, du zinc et de l'étain.

9. Composition selon l'une quelconque des revendications précédentes, **caractérisée en ce qu'**elle comprend en plus encore un composant e) qui est au moins un composé choisi dans le groupe constitué par les substances influençant le pH, les solvants organiques, les composés fluorés solubles dans l'eau et les nanoparticules.

10. Composition selon l'une quelconque des revendications précédentes, **caractérisée en ce qu'**elle contient au moins un type de cation choisi dans le groupe constitué par les ions de métal alcalin, les ions d'ammonium et les composés correspondants.

11. Concentrât, **caractérisé en ce qu'**il peut être préparé par dilution d'une composition selon l'une quelconque des revendications précédentes.

12. Procédé pour le revêtement de surfaces métalliques, **caractérisé en ce qu'**une surface métallique est mise en contact avec une composition selon l'une quelconque des revendications 1 à 10.

13. Procédé selon la revendication 12, **caractérisé en ce que** la surface métallique à traiter contient de l'aluminium ou un alliage d'aluminium.

14. Procédé selon l'une quelconque des revendications 12 ou 13, **caractérisé en ce que** les revêtements formés présentent un poids de couche de :
i) 0,1 à 500 mg/m² uniquement par rapport au composant a), exprimé sous forme de silicium, et/ou
ii) 0,5 à 200 mg/m² uniquement par rapport au composant b), exprimé sous forme de zirconium.

15. Procédé selon l'une quelconque des revendications 12 à 14, **caractérisé en ce qu'**un rinçage est réalisé avant un autre traitement pour éliminer le polymère en excès de la surface métallique.

16. Utilisation de substrats métalliques revêtus par un procédé selon l'une quelconque des revendications 12 à 15 dans l'industrie automobile, pour des véhicules ferroviaires, dans l'industrie aéronautique et spatiale, dans la construction d'appareils, dans la construction de machines, dans l'industrie de la construction, dans l'industrie des meubles, pour la fabrication de gardecorps, de lampes, de profilés, d'habillages ou de petites pièces, pour la fabrication de carrosseries ou de parties de carrosserie, de composants individuels, d'éléments prémontés ou assemblés, pour la fabrication d'appareils ou d'installations, de dispositifs de commande, de dispositifs de test ou d'éléments de construction.
